# EUROPEAN PATENT SPECIFICATION

(11) **EP 2 540 618 B1**
(45) Date of publication and mention of the grant of the patent: **22.10.2014**
(21) Application number: 12173665.6
(22) Date of filing: 26.06.2012
(51) Int. Cl.: B64C 3/34

(54) **Filler panel for bulkhead to skin joint in integral tanks**
Ausgleichplatte für die Verbindung zwischen Schottwand und Haut von Integraltanks
Panneaux de remplissage pour les peaux de réservoirs de carburant d'aéronefs

(30) Priority: 29.06.2011 ES 201131101
(43) Date of publication of application: 02.01.2013
(73) Proprietor: Airbus Operations S.L., 28906 Madrid (ES)
(72) Inventor: Granado Macarrilla, José Orencio, 28906 Getafe (ES); Martínez Valdegrama, Vicente, 28906 Getafe (ES); Casares Rodríguez, Daniel, 28906 Getafe (ES); Recio Melero, Manuel, 28906 Getafe (ES)
(74) Representative: Elzaburu Marquez, Alberto

(56) References cited:
- US-A- 5 983 945
- US-A1- 2005 236 524
- US-A1- 2006 226 287
- US-A1- 2008 179 461

## Description

### FIELD OF THE INVENTION

This invention refers to the skins of aircraft fuel tanks and, more in particular, to filler panels attached to them on the intersection areas with the fuel tank bulkheads, between contiguous stringers.

### BACKGROUND OF THE INVENTION

The main structure for aircraft lifting surfaces mainly consists of a leading edge, a torsion box, a trailing edge, a root joint and a wing tip. The torsion box in turn consists of several structural elements: upper and lower skins stiffened by stringers on one side; spars and ribs on the other side. Typically, the structural elements forming the torsion box are manufactured separately and are joined with the aid of complicated tooling to achieve the necessary tolerances, which are given by the aerodynamic, assembly and structural requirements.

Nowadays, and particularly in the aeronautical industry, composite materials with an organic matrix and continuous fibres, especially CFRP (Carbon Fibre Reinforced Plastic) are widely used in a great variety of structural elements. For example, all the elements which make up the torsion box enumerated beforehand (ribs, stringers, spars and skins) can be manufactured using CFRP.

The skins which make up the torsion boxes are stiffened with span wise longitudinal stringers that improve both the strength and the buckling behaviour of the skins having different cross sections such as "T", "I" or "J" shaped cross sections. Full height of stringer benefits the stability of the panel by means of a bigger inertia in the stiffening element.

US 2006/0226287 A1, referred to "Structural panels for use in aircraft fuselages and other structures", discloses a structural panel that includes a skin having at least one offset surface. The structural panel can further include at least first and second stiffeners. The first stiffener can have a first flange portion mated to the skin adjacent to the offset surface. The second stiffener can be spaced apart from the first stiffener and can similarly have a second flange portion mated to the skin adjacent to the offset surface. The structural panel can additionally include a support member mated to the first flange portion of the first stiffener, the second flange portion of the second stiffener, and the offset surface of the skin.

Aircraft fuel tanks are usually housed in the torsion box of the aircraft wing. They are usually delimited by bulkheads following rib and stringer traces.

The design and manufacture of said torsion boxes involves several problems. One of them is the sealing of the holes that remain between the skins and the bulkheads close to the intersection areas between bulkheads and stringers.

One known solution for said problem is attaching to the skins filler panels covering said holes by means of rivets. An important drawback of this solution is that requires a riveting operation during the assembly of the torsion box of the wing that involves time and costs.

This invention is focused on the solution of this problem.

### SUMMARY OF THE INVENTION

One object of the present invention is to provide an aircraft lifting surface comprising one or more fuel tanks delimited by watertight bulkheads easy to assemble.

Another object of the present invention is to provide an aircraft lifting surface comprising one or more fuel tanks delimited by watertight bulkheads with a limited number of riveted unions.

These and another objects are met by an aircraft lifting surface as in claim 1, such as a wing, structured as a torsion box comprising upper and lower skins stiffened by span wise stringers, span wise front and rear spars and chord wise ribs, said aircraft lifting surface comprising one or more fuel tanks arranged inside of said torsion box and separated by bulkheads, the stringers having extended feet in the intersection areas with said bulkheads, also comprising filler panels of said skins covering the holes that remain between said skins and said bulkheads outside said intersection areas, said extended feet having an arched shape with a symmetry axis on the trace of each intersected bulkhead and said filler panels having a "dog bone" shape adapted to said arched shape, the configuration of said filler panels thus being adapted for covering the space between the extended feet of contiguous stringers, leaving a gap with them of a predetermined width W1, thereby providing a self-fastening capability over each skin plane that facilitates the attachment of said filler panels to said skins.

In embodiments of the present invention wherein said predetermined width W1 between a filler panel and the borders of the extended feet of contiguous stringers is comprised between 2-4 mm. Hereby it is achieved an aircraft lifting surface with a minimum gap between the extended feet of contiguous stringers and said filler panels for allowing its attachment to the skin without compromising said self-fastening capability.

In embodiments of the present invention said skins and said stringers are made of Carbon Fibre Reinforced Plastic (CFRP), said bulkheads are made of aluminum and said filler panels are made of Glass Fibre Reinforced Plastic (GFRP). Hereby it is achieved an aircraft lifting surface having self-fastening low-weight filler panels for covering the holes between the skins and the bulkheads.

In embodiments of the present invention said stringers are T-shaped stringers. Hereby it is achieved an aircraft lifting surface having filler panels suitable shaped for being incorporated to skins stiffened with T-shaped stringers.

In embodiments of the present invention each border of said extended feet comprise a central straight segment and two curved segments and each border of said filler panels comprise a central straight segment, two curved intermediate segments and two end straight segments of a predetermined length W2 (preferably comprised between 10-14 mm), displaced at a predetermined perpendicular distance W3 (preferably comprised between 20-30 mm) from said central straight segment. Hereby it is achieved an aircraft lifting surface having filler panels of an optimized configuration for being incorporated to skins stiffened with T-shaped stringers.

Other characteristics and advantages of the present invention will be clear from the following detailed description of embodiments illustrative of its object in relation to the attached figures.

### BRIEF DESCRIPTION OF DRAWINGS

Figure 1a is a perspective view of a known multi-rib torsion box of an aircraft wing and Figure 1b is a cross-section view of Figure 1 a along plane A-A.
Figure 2 is a plan view of a left part of an aircraft wing showing the position of a centre fuel tank, an outboard fuel tank, a surge tank and a small tank.
Figure 3 is a plan view of a wing skin in an intersection area between one fuel tank bulkhead and two contiguous stringers incorporating a filler panel according to the present invention.
Figure 4 is an enlarged view of said filler panel.
Figure 5 is a transversal section of said intersection area in the lower wing skin.
Figure 6 is an enlarged view of the filler panel according to the present invention attached to the lower wing skin.

### DETAILED DESCRIPTION OF THE INVENTION

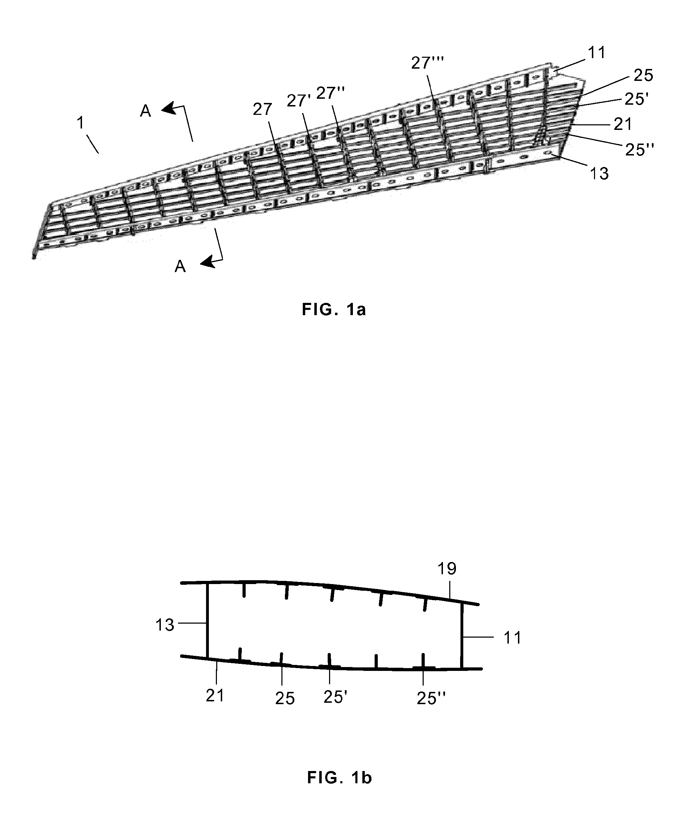

The invention relates to fuel tanks housed in a multi-rib torsion box structure with longitudinal stiffeners having preferably a T-shaped cross-section. A multi-rib torsion box 1 such as the one depicted in Figures 1 a and 1 b is structurally based on a span wise front spar 11 and a span wise rear spar 13 (understanding the terms front and rear in relation to the flight direction of the aircraft), a plurality of chord wise ribs 27, 27', 27", 27"' and the upper and lower skins 19, 21 with a plurality of span wise stringers 25, 25', 25".

The main functions of ribs 27, 27', 27", 27"' is to provide torsion rigidity and to limit the skins 19, 21 and the stringers 25, 25', 25" longitudinally so as to discretize the buckling loads and maintain the shape of the aerodynamic surface.

The primary function of the skins 19, 21 is to provide a continuous surface to give support and distribute the aerodynamic loads and, thus, it is structured as a set of panels delimited by said ribs 27, 27', 27", 27"' and said stringers 25, 25', 25" as well as the front spar 11 and the rear spar 13.

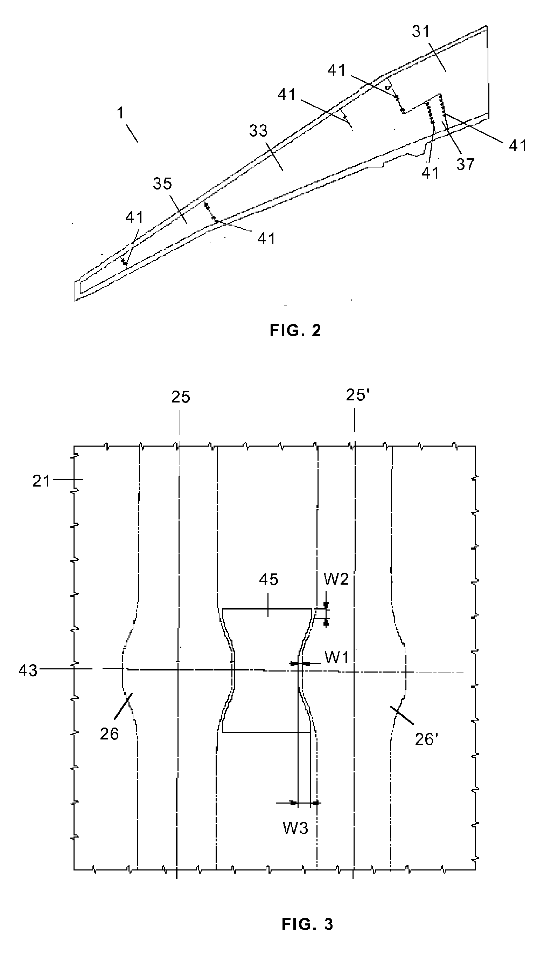

Figure 2 shows the left part of the torsion box of an aircraft wing housing a centre tank 31, an outboard tank 33 a surge tank 35 and also an small tank 37 where is located the fuel pump. Said tanks are separated by bulkheads 41 following rib or stringer traces. The bulkheads 41 and the ribs 27, 27', 27", 27"' have a similar structure but the bulkheads 41 shall be watertight, as they are the tank walls.

Figure 3 shows an intersection area of, for instance, the lower skin 21 with one of said bulkheads 41 represented by its trace 43 between two contiguous stringers 25, 25'.

In said intersection area, the stringers 25, 25' have extended feet 26, 26' in a similar way to the intersections between stringers and ribs for providing space for the stringer-rib-skin unions. As represented in Figure 3 said extended feet 26, 26' have typical arched borders.

According to an embodiment of this invention in said intersection area a filler panel 45, dimensioned for covering the space between said extended feet 26, 26', leaving a gap W1 between their borders, is attached to the skin 21. Said filler panel 45 has a "dog bone" shape determined by the arched borders of the extended feet 26, 26' that provides a self-fastening capability over the skin plane, i.e. the filler panel 45 is embraced by the contiguous extended feet 26, 26' preventing its displacement over the skin surface.

In a preferred embodiment, the arched borders of the extended feet 26, 26' comprise a central straight segment 27 and two curved segments 28, 29 and the opposed borders of the filler panels 45 comprise a central straight segment 47, two curved intermediate segments 48, 49 and two end straight segments 50, 51 of a length W2, displaced at a perpendicular distance W3 from said central straight segment 47.

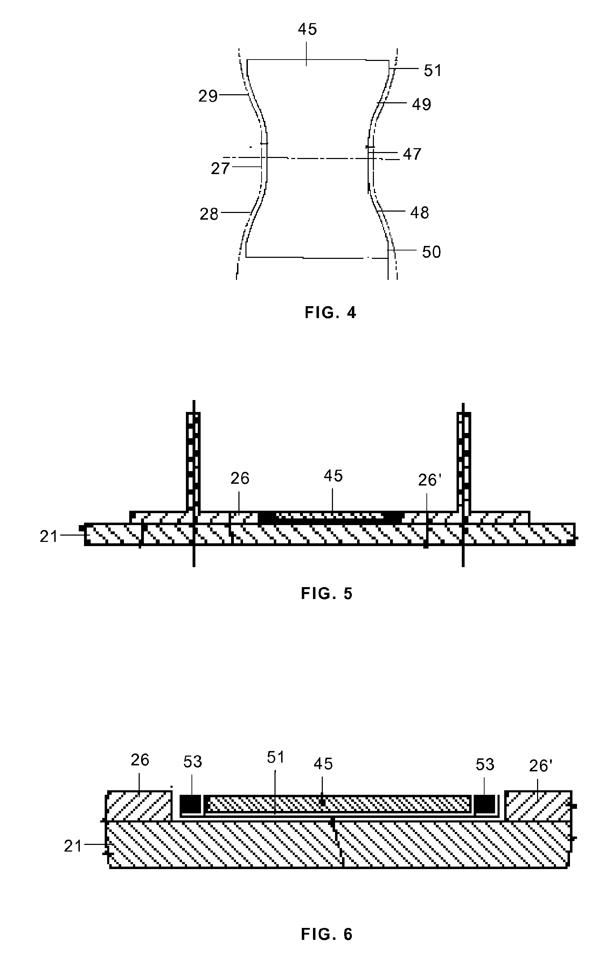

Figure 5 shows an intersection area with a filler panel 45 in the lower skin 21 and Figure 6 shows how said filler panel 45 is attached to the lower skin 21 using a first sealing means 51 and how the gaps with the borders of the extended feet 26, 26' are sealed with a second sealing means 53 of a lesser density than said first sealing means 51.

In preferred embodiments of the invention:
- The stringers 25, 25', 25" and the skins 19, 21 are made of Carbon Fibre Reinforced Plastic (CFRP).
- The bulkheads 41 are made of aluminum.
- The filler panels 45 are made of Glass Fibre Reinforced Plastic (GFRP).
- W1 is comprised between 2-4 mm.
- W2 is comprised between 10-14 mm.
- W3 is comprised between 20-30 mm.

Although the present invention has been fully described in connection with preferred embodiments, it is evident that modifications may be introduced within the scope thereof, not considering this as limited by these embodiments, but by the contents of the following claims.

## Claims

1. An aircraft lifting surface structured as a torsion box comprising upper and lower skins (19, 21) stiffened by span wise stringers (25, 25', 25"), span wise front and rear spars (11, 13) and chord wise ribs (27, 27', 27"), said aircraft lifting surface comprising one or more fuel tanks (31, 33, 35, 37) arranged inside of said torsion box and separated by bulkheads (41), the stringers (25, 25', 25") having extended feet (26, 26') in the intersection areas with said bulkheads (41), also comprising filler panels (45) of said skins (19, 21) covering the holes that remain between said skins (19, 21) and said bulkheads (41) outside said intersection areas, wherein said extended feet (26, 26') have an arched shape with a symmetry axis on the trace of each intersected bulkhead (41), and **characterised in that** said filler panels (45) have a "dog bone" shape adapted to said arched shape, the configuration of said filler panels (45) thus being adapted for covering the space between the extended feet (26, 26') of contiguous stringers (25, 25'), leaving a gap with them of a predetermined width (W1), thereby providing a self-fastening capability for said filler panels (45) over each skin plane that facilitates the attachment of said filler panels (45) to said skins (19, 21).

2. An aircraft lifting surface according to claim 1, wherein said predetermined width (W1) between a filler panel (45) and the borders of the extended feet (26, 26') of contiguous stringers (25, 25') is comprised between 2-4 mm.

3. An aircraft lifting surface according to any of claims 1-2, wherein said skins (19, 21) and said stringers (25, 25', 25") are made of CFRP, said bulkheads (41) are made of aluminum and said filler panels (45) are made of GFRP.

4. An aircraft lifting surface according to any of claims 1-3, wherein said stringers (25, 25', 25") are T-shaped stringers.

5. An aircraft lifting surface according to any of claims 1 to 4, wherein:
- each border of said extended feet comprise a central straight segment (27) and two curved segments (28, 29);
- each border of said filler panels (45) comprise a central straight segment (47), two curved intermediate segments (48, 49) and two end straight segments (50, 51) of a predetermined length (W2), displaced at a predetermined perpendicular distance (W3) from said central straight segment (47).

6. An aircraft lifting surface according to claim 5, wherein:
- said predetermined length (W2) is comprised between 10-14 mm;
- said predetermined perpendicular distance (W3) is comprised between 20-30 mm.

7. An aircraft lifting surface according to any of claims 1-6, wherein the lifting surface is a wing.

## Patentansprüche

1. Flugzeugtragfläche, die als ein Torsionskasten mit einer oberen und einer unteren Haut (19, 21) strukturiert ist, die durch sich in Spannweitenrichtung erstreckende Stringer (25, 25', 25"), sich in Spannweitenrichtung erstreckende vordere und hintere Holme (11, 13) und sich in Profilrichtung erstreckende Rippen (27, 27', 27") versteift sind, wobei die Flugzeugtragfläche einen oder mehrere Kraftstofftanks (31, 33, 35, 37) aufweist, die im Inneren des Torsionskastens angeordnet und durch Trennwände (41) getrennt sind, wobei die Stringer (25, 25', 25") Füße (26, 26') an den Schnittbereichen mit den Trennwänden (41) aufweisen, wobei der Torsionskasten ferner Fillerpanelen (45) der Häute (19, 21) aufweist, die Löcher abdecken, die zwischen den Häuten (19, 21) und den Trennwänden (41) außerhalb der Schnittflächen verbleiben,
wobei die Füße (26, 26') eine Bogenform mit einer Symmetrieachse an der Schnittlinie mit jeder Trennwand (41) aufweisen;
**dadurch gekennzeichnet, dass**
die Fillerpanelen (45) eine an die Bogenform angepasste "Hundeknochen"form haben, so dass die Konfiguration der Fillerpanelen (45) dazu geeignet ist, den Raum zwischen den Füßen (26, 26') benachbarter Stringer (25, 25') abzudecken, wobei ein Zwischenraum mit einer vorgegebenen Breite (W1) dazwischen verbleibt, um eine Selbstbefestigungsfähigkeit für die Fillerpanelen (45) auf jeder Hautebene bereitzustellen, die die Anbringung der Fillerpanelen (45) an den Häuten (19, 21) erleichtert.

2. Flugzeugtragfläche nach Anspruch 1, wobei die vorgegebene Breite (W1) zwischen einer Fillerpanele (45) und den Grenzen der Füße (26, 26') benachbarter Stringer (25, 25') zwischen 2 und 4 mm beträgt.

3. Flugzeugtragfläche nach Anspruch 1 oder 2, wobei die Häute (19, 21) und die Stringer (25, 25', 25") aus CFRP hergestellt sind, die Trennwände aus Aluminium hergestellt sind und die Fillerpanelen (45) aus GFRP hergestellt sind.

4. Flugzeugtragfläche nach einem der Ansprüche 1 bis 3, wobei die Stringer (25, 25', 25") T-förmige Stringer sind.

5. Flugzeugtragfläche nach einem der Ansprüche 1 bis 4, wobei:
jede Grenze der Füße ein mittleres gerades Segment (27) und zwei gekrümmte Segmente (28, 29) aufweist, und
jede Grenze der Fillerpanelen (45) ein mittleres gerades Segment (47), zwei gekrümmte Zwischensegmente (48, 49) und zwei gerade Endsegmente (50, 51) mit einer vorgegebenen Länge (W2) aufweist, die in einem vorgegebenen senkrechten Abstand (W3) vom mittleren geraden Segment (47) beabstandet sind.

6. Flugzeugtragfläche nach Anspruch 5, wobei:
die vorgegebene Länge (W2) zwischen 10 und 14 mm beträgt, und
der vorgegebene senkrechte Abstand (W3) zwischen 20 und 30 mm beträgt.

7. Flugzeugtragfläche nach einem der Ansprüche 1 bis 6, wobei die Tragfläche ein Flügel ist.

## Revendications

1. Surface de sustentation d'aéronef structurée en tant que caisson de torsion comprenant des revêtements supérieur et inférieur (19, 21) renforcés par des lisses dans le sens de l'envergure (25, 25', 25"), des longerons avant et arrière (11, 13) dans le sens de l'envergure et des nervures (27, 27', 27") dans le sens de la corde, ladite surface de sustentation d'aéronef comprenant un ou plusieurs réservoirs à combustible (31, 33, 35, 37) agencés à l'intérieur dudit caisson de torsion et séparés par des cloisons (41), les lisses (25, 25', 25 ") ayant des pieds étendus (26, 26') dans les zones d'intersection avec lesdites cloisons (41), comprenant également des panneaux de remplissage (45) desdits revêtements (19, 21) couvrant les trous qui restent entre lesdites revêtements (19, 21) et lesdites cloisons (41) à l'extérieur desdites zones d'intersection,
lesdits pieds étendus (26, 26') ayant une forme arquée avec un axe de symétrie sur la trace de chaque cloison (41) d'intersection, et **caractérisée en ce que** :
lesdits panneaux de remplissage (45) disposent d'une forme "d'os de chien" adaptée à ladite forme arquée, la configuration desdits panneaux de remplissage (45) étant ainsi adaptée pour couvrir l'espace entre les pieds étendus (26, 26') de lisses contigües (25, 25'), laissant un intervalle entre ceux-ci d'une largeur prédéterminée (W1), ce qui permet de fournir une capacité d'auto-fixation pour lesdits panneaux de remplissage (45) sur chaque plan de revêtement qui facilite la jonction desdits panneaux de remplissage (45) auxdits revêtements (19, 21).

2. Surface de sustentation d'aéronef selon la revendication 1, dans laquelle ladite largeur prédéterminée (W1) entre un panneau de remplissage (45) et les bords des pieds étendus (26, 26') de lisses contigües (25, 25') est comprise entre 2 et 4 mm.

3. Surface de sustentation d'aéronef selon l'une des revendications 1 et 2, dans laquelle lesdits revêtements (19, 21) et lesdites lisses (25, 25', 25") sont réalisées en plastique renforcé par des fibres de carbone, CFRP, lesdites cloisons (41) sont réalisées en aluminium et lesdits panneaux de remplissage (45) sont réalisés en plastique renforcé par des fibres de verre, GFRP.

4. Surface de sustentation d'aéronef selon l'une des revendications 1 à 3, dans laquelle lesdites lisses (25, 25', 25") sont des lisses en forme de T.

5. Surface de sustentation d'aéronef selon l'une des revendications 1 à 4, dans laquelle :
- chaque bord desdits pieds étendus comprend un segment droit central (27) et deux segments incurvés (28, 29) ;
- chaque bord desdits panneaux de remplissage (45) comprend un segment droit central (47), deux segments intermédiaires incurvés (48, 49) et deux segments droits d'extrémité (50, 51) d'une longueur prédéterminée (W2), déplacés à une distance perpendiculaire prédéterminée (W3) dudit segment droit central (47).

6. Surface de sustentation d'aéronef selon la revendication 5, dans laquelle :
- ladite longueur prédéterminée (W2) est comprise entre 10 et 14 mm ;
- ladite distance perpendiculaire prédéterminée (W3) est comprise entre 20 et 30 mm.

7. Surface de sustentation d'aéronef selon l'une des revendications 1 à 6, la surface de sustentation étant une aile.
